# EUROPÄISCHE PATENTANMELDUNG

(11) **EP 0 703 181 A2**
(43) Veröffentlichungstag der Anmeldung: **27.03.1996**
(21) Anmeldenummer: 95112988.1
(22) Anmeldetag: 18.08.1995
(51) Int. Cl.: B66B 1/46, B66B 3/00, G05B 19/042

(54) **Ein- und Ausgabesystem für Aufzugssteuerungen**

(30) Priorität: 22.09.1994 DE 9415342 U
(71) Anmelder: C. HAUSHAHN GmbH & Co., D-70469 Stuttgart (DE)
(72) Erfinder: Scheub, Volker Dipl.-Ing., D-71334 Waiblingen (DE); Erker, Hubert Dipl.-Ing.(BA), D-73072 Donzdorf (DE); Klass, Dieter Dipl.-Ing.(BA), D-72555 Metzingen (DE); Schwarzbach, Peter Dipl.-Ing.(FH), D-71144 Steinenbronn (DE); Brück, Ralf Dipl.-Ing.(FH), D-72108 Rottenburg (DE); Scheeff, Martin Dipl.Ing. (FH), D-71292 Friolzheim (DE); Metzger, Günther Dipl.Ing. (FH), D-70374 Stuttgart (DE)
(74) Vertreter: KOHLER SCHMID + PARTNER

(57) **Zusammenfassung**

Bei Ein- und Ausgabesystemen für insbesondere dezentrale Aufzugssteuerungen, wobei jedes Gerät 18 des Systems einen Feldbusanschluß und einen Mikrorechner 3 mit implementiertem Steuerprogramm aufweist, sind die Geräte 18 üblicherweise mit Klemmen oder ähnlichen Anschlüssen ausgerüstet, so daß die Taster, Schalter und Anzeigen jeweils gesondert angeschlossen werden müssen. Um den Verdrahtungsaufwand in den Bediengeräten zu verringern und damit die Herstellung zu erleichtern, weisen die Geräte 18 mindestens an ihrem Ausgang Steckverbinder 6 für Funktionsmodule auf, welche ein vom Steuerprogramm kontrolliertes Register für Schreib- und Lesevorgänge mit mindestens einem Bit besitzen, deren Leitungen mit Eingangs- und Ausgangssteckverbindern zum Anschluß weiterer Funktionsmodule versehen sind.

## Beschreibung

Es sind bereits Ein- und Ausgangssysteme für insbesondere dezentrale Aufzugssteuerungen bekannt, wobei in jedem Stockwerk, in der Kabine oder in den Bediengeräten des Aufzuges ein Systemgerät mit einem Feldbus sowie einem Mikrorechner mit implementiertem Steuerprogramm vorgesehen ist. Die Geräte besitzen jeweils einen binären Ein- und Ausgang zum Anschluß von Tasten, Schaltern, Anzeigen od. dgl. Das Systemgerät wickelt dabei mit Hilfe des Mikrorechners und seines Steuerprogramms den Datenaustausch zwischen den einzelnen Geräten über den Feldbus ab. Üblicherweise sind die Geräte dabei mit Klemmen oder ähnlichen Anschlüssen ausgerüstet, so daß die Taster, Schalter und Anzeigen jeweils gesondert angeschlossen werden müssen. Infolgedessen ergibt sich ein sehr hoher Installationsaufwand in den Geräten.

Bei einem anderen ebenfalls bekannten System sind zwar die Taster, Schalter und Anzeigen auf der Platine des Systemgerätes integriert, so daß kein zusätzlicher Verdrahtungsaufwand erforderlich ist, jedoch ist hier die Anzahl, Anordnung und Funktion der Taster, Schalter und Anzeigen fest vorgegeben. Erweiterungen sind kaum möglich bzw. werden wie in der ersten Variante durch zusätzliche Klemmen am Systemgerät verdrahtet.

Die Aufgabe der vorliegenden Erfindung ist es, einerseits den Verdrahtungsaufwand in den Bediengeräten zu verringern und damit die Herstellung zu erleichtern und andererseits ein System zu schaffen, bei dem Erweiterungen jeder Zeit möglich sind, ohne daß ein zusätzlicher Verdrahtungsaufwand anfällt. Dies wird erfindungsgemäß dadurch erreicht, daß die Systemgeräte mindestens an ihrem Ausgang Steckverbinder für Funktionsmodule aufweisen, welche ein vom Steuerprogramm des Mikrorechners kontrolliertes Register für Schreib- und Lesevorgänge mit mindestens einem Bit besitzen und deren Leitungen mit Eingangs- und Ausgangssteckverbindern zum Anschluß weiterer Funktionsmodelle versehen sind. Durch die Verwendung von Steckverbindungen entfällt beim Aufbau der Geräte jeglicher Verdrahtungsaufwand und außerdem kann man eine beliebige Anzahl von Funktionsmodulen, welche jeweils hintereinander gesteckt werden, an das Systemgerät anschließen, so daß sich ein ausgesprochen flexibles System ergibt.

Nach einem weiteren Merkmal der Erfindung weisen die Funktionsmodule mindestens ein Eingangs- und insbesondere auch ein Ausgangsschieberegister auf. Dabei wird vorzugsweise anstelle des bei üblichen Systemgeräten verwendeten Ein- und Ausgangtreibers eine Interfaceschaltung zur Ansteuerung eines diskret aufgebauten Schieberegisters verwendet. Weiterhin ist es von Vorteil, wenn die Funktionsmodule einen dem Ausgangsregister nachgeschalteten Ausgangsspeicher mit Ausgabevorrichtung aufweisen. Die Eingangsregister der Funktionsmodule sind zweckmäßig mit einer vorgeschalteten Verknüpfungslogik verbunden, die unter anderem eine automatische Identifikation des Moduls ermöglicht.

Vorzugsweise sind auf den Funktionsmodulen Taster, Schalter, Anzeigen od. dgl. vorgesehen, welche insbesondere auf der Platine des Moduls integriert sind. Um die Funktionen der einzelnen Funktionsmodelle insbesondere bei der Installation leicht erkennen zu können, sind diese mit Blenden, Abdeckungen od. dgl. versehen, welche ihre Funktionen anzeigen. Lediglich für Sonderfälle ist es zweckmäßig, auf den Funktionsmodulen Klemmen für Außenanschlüsse und hierfür eine besondere Treiberlogik vorzusehen.

Bei einer vereinfachten Ausführungsform wird das Schieberegister durch eine Verdrahtungslogik ersetzt. Hierbei weist nach einem weiteren Merkmal der Erfindung der Mikrorechner eine größere Anzahl von Ein- und Ausgängen und das Systemgerät eine Treiberschaltung für Ein- und Ausgänge auf. Dabei sind die Funktionsmodule mit verschiedenen durch die Module hindurchgeführten Ein- und Ausgangsleitungen sowie Versorgungsleitungen verbunden. Bei einer solchen Verdrahtungslogik weist der Mikrorechner zweckmäßig mindestens eine der Anzahl der angeschlossenen Funktionsmodule entsprechende Zahl von Ein- und Ausgängen mit auf, wobei die Funktionsmodule jeweils an gesonderte Ein- und Ausgänge angeschlossen sind und die teilweise durch die Module hindurch geschleiften Leitungen zwischen Eingang und Ausgang versetzt sind.

Die Zeichnungen zeigen ein Ausführungsbeispiel in schematischer Darstellung. Es zeigen:
- Fig. 1: ein Systemgerät
- Fig. 2: ein Systemgerät mit angeschlossenen Funktionsmodulen,
- Fig. 3: eine Darstellung gemäß Fig. 2 einer anderen Ausführungsform,
- Fig. 4: ein Funktionsmodul,
- Fig. 5: ein Funktionsmodul mit Verdrahtungslogik.

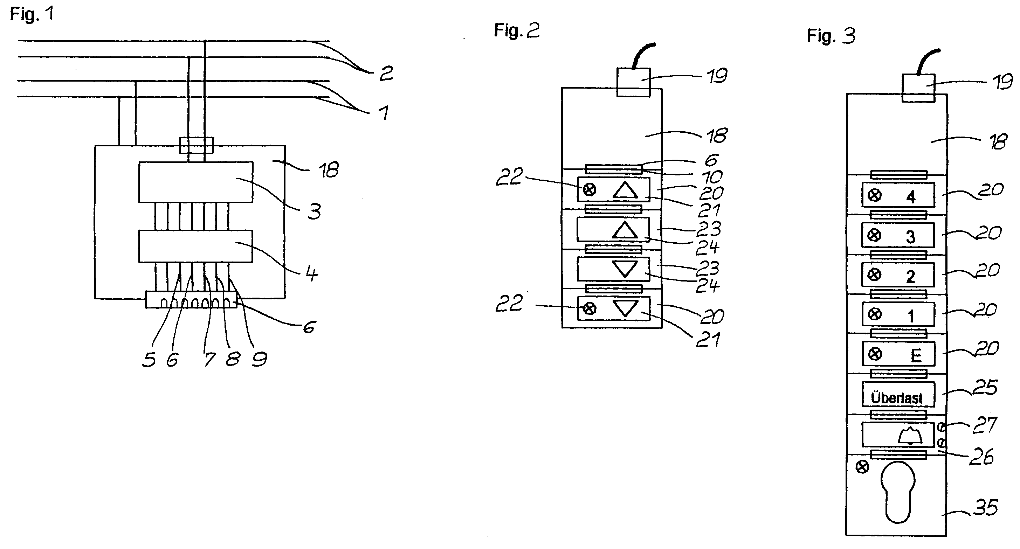

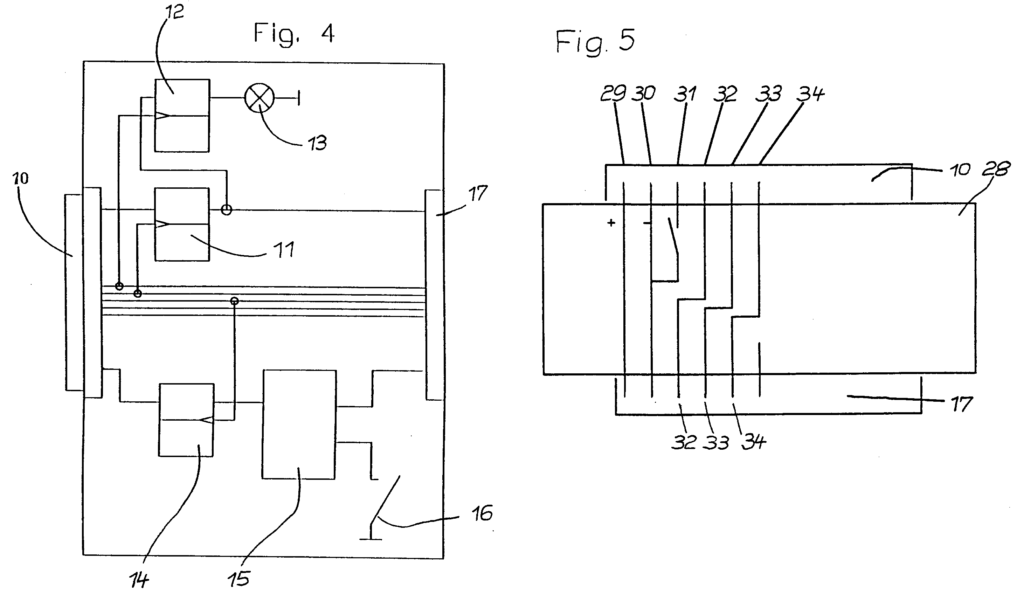

Das in Fig. 1 dargestellte Systemgerät 18 ist an die Versorgungsleitungen 1 angeschlossen. Über die Datenleitungen 2 werden die Feldbussignale einem Mikrorechner 3 zugeführt, welcher seinerseits mit einer Interfaceschaltung 4 verbunden ist. Von dieser aus sind Leitungen zu den Steckverbindungen 6 geführt. Das Schieberegister gemäß Fig. 4 benötigt je ein Taktsignal zum Schreiben 5 und Lesen 6 sowie ein Synchronisationssignal 7. Diese Signale werden in ihrem zeitlichen Ablauf vom Mikrorechner mit einem darauf ablaufenden Steuerprogramm erzeugt und dementsprechend die Daten auf der Leseleitung 8 des Schieberegisters gelesen bzw. werden auf die Schreibleitung 9 ausgegeben.

An die Steckverbindung 6 können nun unterschiedliche Funktionsmodule angeschlossen werden. Ein solches Funktionsmodul ist im einzelnen in Fig. 4 dargestellt. Der Steckanschluß 10 dient zur Kupplung am Steckverbinder 6 des Systemgerätes. Daran schließen sich ein Ausgangsschieberegister 11 mit nachgeschaltetem Ausgangsspeicher 12 an, dem ein Ausgabegerät 13, nämlich eine LED angeschlossen ist. Außerdem ist ein Eingangsschieberegister 14 mit einer vorgeschalteten Verknüpfungslogik 15 vorgesehen, über welche ein Eingangssignal beispielsweise von einem Taster 16 eingelesen wird. Das Funktionsmodul ist so aufgebaut, daß mehrere davon nacheinander geschaltet werden können. Dazu besitzt es einen zweiten Steckanschluß 17, über welchen ein weiteres Funktionsmodul angesteckt werden kann. Hierüber werden die vom Mikrorechner 3 erzeugten Signale, welche teilweise vorbearbeitet sind, zwischen den Funktionsmodulen weitergereicht. Dadurch entsteht ein modulares diskret aufgebautes Schieberegister mit variabler Größe, je nachdem wie viele Funktionsmodule aneinander angereiht sind.

In den Fign. 2 und 3 ist jeweils ein Systemgerät 18 mit mehreren auf dieses aufgesteckten Funktionensmodulen dargestellt. Das Systemgerät 18 ist mit einem Busanschluß 19 verbunden und weist in Fig. 2 zwei Funktionsmodule 20 auf, welche mit einem Taster 21 und einer Anzeige 22 versehen sind. Außerdem sind zwei Funktionsmodule 23 vorgesehen, welche jeweils Anzeigen 24 aufweisen. In Fig. 3 ist ein Kommandogerät einer Aufzugskabine dargestellt mit einem Systemgerät 18 und Busanschluß 19. Die Funktionsmodule 20 sind die gleichen wie in Fig. 2. Zusätzlich ist noch ein Funktionsmodul 25 zur Anzeige der Überlast und ein Funktionsmodul 26 als Notruftaster angeordnet, wobei dieses Funktionsmodul Anschlußklemmen 27 für den Anschluß der von der Elektronik unabhängigen Notrufeinrichtung besetzt. Als letztes ist ein Funktionsmodul 35 zur Aufnahme eines Schließzylinders für einen Schlüsselschalter vorgesehen.

Im Ausführungsbeispiel nach Fig. 5 ist das Schieberegister durch eine Verdrahtungslogik ersetzt. Dabei ist am Systemgerät 18 in nicht dargestellter Weise die Interface-Schaltung 4 durch eine Treiberschaltung ersetzt. Am Funktionsmodul 28 sind wiederum Eingangs- und Ausgangssteckverbinder 10 und 17 vorgesehen. Versorgungsspannung wird über die Leitungen 29 und 30 zugeführt und außerdem sind eine begrenzte Anzahl von direktionalen Eingabe- und Ausgabeleitungen 31 bis 34 vorgesehen. Das Funktionsmodul 28 in Fig. 5 verwendet die Leitung 31 als Ein- oder Ausgang. Auf den Steckverbinder 17 des Funktionsmoduls 28 wird das Signal 32 auf den ursprünglichen Platz des Signals 31 auf der Steckverbindung 17 verdrahtet. Die weiteren Leitungen werden in gleicher Weise versetzt.

## Patentansprüche

1. Ein- und Ausgabesystem für insbesondere dezentrale Aufzugssteuerungen, wobei jedes Gerät des Systems einen Feldbusanschluß und einen Mikrorechner mit implementiertem Steuerprogramm aufweist, dadurch gekennzeichnet, daß die Geräte (18) mindestens an ihrem Ausgang Steckverbinder (6) für Funktionsmodule (20, 23, 25, 26) aufweisen, welche ein vom Steuerprogramm kontrolliertes Register für Schreib- und Lesevorgänge mit mindestens einem Bit besitzen, deren Leitungen mit Eingangs- (10) und Ausgangs-(17) -steckverbindern zum Anschluß weiterer Funktionsmodule versehen sind.

2. Ein- und Ausgabesystem nach Anspruch 1, dadurch gekennzeichnet, daß die Funktionsmodule (20, 23, 25, 26) mindestens ein Eingangs- (14) und insbesondere auch ein Ausgangs-(11) -schieberegister aufweisen.

3. Ein- und Ausgabesystem nach Anspruch 2, dadurch gekennzeichnet, daß die Geräte (18) eine Interfaceschaltung (4) für die Ansteuerung der Schieberegister der Funktionsmodule (20, 23, 25, 26) enthalten.

4. Ein- und Ausgabesystem nach einem oder beiden der vorhergehenden Ansprüche 2 bis 3, dadurch gekennzeichnet, daß die Funktionsmodule (20, 23, 25, 26) einen dem Ausgangsregister (11) nachgeschalteten Ausgangsspeicher (12) mit Ausgabevorrichtung (13) aufweisen.

5. Ein- und Ausgabesystem nach einem oder mehreren der vorhergehenden Ansprüche 2 bis 4, dadurch gekennzeichnet, daß die Eingangsregister (14) der Funktonsmodule (20, 23, 25, 26) mit einer vorgeschalteten Verknüpfungslogik (15) verbunden sind.

6. Ein- und Ausgabesystem nach einem oder mehreren der vorhergehenden Ansprüche, dadurch gekennzeichnet, daß auf den Funktionsmodulen (20, 23, 25, 26) Taster (23), Schalter, Anzeigen (22, 24) od. dgl. vorgesehen sind, welche insbesondere auf der Platine der Funktionsmodule (20, 23, 25, 26) integriert sind.

7. Ein- und Ausgabesystem nach Anspruch 6, dadurch gekennzeichnet, daß auf den Funktionsmodulen (20, 23, 25, 26) Blenden, Abdeckungen od. dgl. zur Erkennung ihrer Funktionen vorgesehen sind.

8. Ein- und Ausgabesystem nach einem oder mehreren der vorhergenden Ansprüche, dadurch gekennzeichnet, daß auf den Funktionsmodulen (26) Klemmen (27) für Außenanschlüsse und eine Treiberlogik für diese vorgesehen sind.

9. Ein- und Ausgabesystem nach Anspruch 1, dadurch gekennzeichnet, daß der Mikrorechner (3) eine größere Anzahl von Ein- und Ausgängen aufweist, wobei die Funktionsmodule (28) mit verschiedenen durch die Module durchgeführten Ein- und Ausgabeleitungen (31 bis 34) und Versorgungsleitungen (29, 30) versehen sind.

10. Ein- und Ausgabesystem nach Anspruch 9, dadurch gekennzeichnet, daß der Mikrorechner (3) mindestens eine der Anzahl der angeschlossenen Funktionsmodule (28) entsprechende Zahl von Ein- und Ausgängen aufweisen, wobei die Funktionsmodule (28) jeweils an gesonderte Ein- und Ausgänge angeschlossen sind und die teilweise durch die Module hindurchgeschleiften Leitungen (31 bis 34) zwischen Eingang (10) und Ausgang (17) versetzt sind.
